# EUROPÄISCHE PATENTSCHRIFT

(11) **EP 4 285 039 B1**
(45) Veröffentlichungstag und Bekanntmachung des Hinweises auf die Patenterteilung: **02.04.2025**
(21) Anmeldenummer: 21839834.5
(22) Anmeldetag: 14.12.2021
(51) Int. Cl.: F16F 1/373, F16F 15/08, F16B 21/07, F16B 21/08

(54) **BEFESTIGUNGSELEMENT UND ENTKOPPLUNGSBAUGRUPPE**
FASTENING ELEMENT AND DECOUPLING ASSEMBLY
ÉLÉMENT DE FIXATION ET MODULE DE DÉCOUPLAGE

(30) Priorität: 01.02.2021 DE 102021102205
(43) Veröffentlichungstag der Anmeldung: 06.12.2023
(73) Patentinhaber: AUDI AG, 85057 Ingolstadt (DE)
(72) Erfinder: NÜBLING, Philipp, 85051 Ingolstadt (DE)
(86) Internationale Anmeldenummer: PCT/EP2021/085578
(87) Internationale Veröffentlichungsnummer: WO 2022/161689

(56) Entgegenhaltungen:
- EP-A1- 2 937 616
- DE-A1- 102005 010 433
- DE-A1- 102019 111 078
- US-A1- 2020 355 238

## Beschreibung

Die vorliegende Erfindung betrifft ein Befestigungselement und eine das Befestigungselement umfassende Entkopplungsbaugruppe für mit einer Karosseriestruktur eines Kraftfahrzeugs verbundene Anbauteile, ein Verfahren zur Herstellung der Entkopplungsbaugruppe und deren Montage.

Zur Reduzierung der während des Betriebs einer Brennkraftmaschine entstehenden Geräusche ist es wichtig, dass an den Motorblock angeflanschte Anbauteile vom Motorblock schwingungsmäßig abgekoppelt sind. Hierzu gibt es Entkopplungselemente zwischen dem Schraubenkopf einer Befestigungsschraube und dem von der Befestigungsschraube gehaltenen Bauteil. Mittels eines Entkopplungselementes können auch weitere, insbesondere kleinere Anbauteile eines Fahrzeugs an dem Fahrzeug befestigt werden, beispielsweise eine Pumpe oder Wärmepumpe einer E-Maschine oder ein Ventil an einem anderem Bauteil eines Fahrzeugs. Mittels dieser Entkopplung zwischen Anbauteil, beispielsweise dem Ventil, und einer weiteren Fahrzeugkomponente werden somit beim Betrieb keine störenden Geräusche in den Innenraum abgegeben.

Die Montage eines herkömmlichen Entkopplungselements benötigt zusätzliche Fertigungszeit, da die Mutter oder Schraube zuerst gesetzt und anschließend angezogen werden muss. Weiterhin wird ein zusätzliches Werkzeug (Schraubenschlüssel bzw. Drehmomentschlüssel) für den Montagevorgang benötigt.

Die DE 10 2019 113 663 A1 betrifft einen Abstandhalter für eine Befestigungsanordnung zum schwingungsgedämpften Befestigen eines Montageteils an einem Trägerteil. Der Abstandhalter weist einen Grundkörper auf mit einem ersten Flanschbereich und einem in Längsrichtung des Grundkörpers gesehen gegenüberliegenden zweiten Flanschbereich sowie mit einem Durchgang, in welchem ein mit dem Trägerteil verbundener oder zu verbindender Befestiger zumindest bereichsweise aufnehmbar ist. Der Grundkörper ist mindestens zweiteilig ausgeführt und weist ein erstes Körperteil und mindestens ein weiteres, zweites Körperteil auf, wobei die Körperteile zum Ausbilden des Grundkörpers miteinander lösbar verbindbar sind, und wobei im verbundenen Zustand der Körperteile zwischen dem ersten und zweiten Flanschbereich ein Spaltbereich vorgesehen ist, von welchem die Umrandung eines in dem Montageteil ausgebildeten Befestigungsloches zumindest bereichsweise aufnehmbar ist.

Die DE 10 2009 017 806 A1 offenbart ein Befestigungselement zur Festlegung eines Bauteils an einem tragenden Teil. Das Befestigungselement weist ein an dem tragenden Teil festlegbares Verankerungselement auf. Des Weiteren ist ein radiales Ausgleichselement zum Ausgleich eines radialen Versatzes zwischen dem Bauteil und dem Verankerungselement vorgesehen. Schließlich verfügt das Befestigungselement noch über ein Halteelement zum Halten des Bauteils.

Aus der DE 10 2016 113 797 A1 ist eine Befestigungseinheit zur fadenlosen Befestigung von Gewebe an Knochen bekannt, mit einem Ankerelement , das an einem Knochen fixierbar ist, einem Halteelement, das mit dem Ankerelement koppelbar ist, um einen Gewebeabschnitt am Knochen anzulagern, wobei das Ankerelement und das Halteelement miteinander verrastbar sind und zwischen sich einen Haltebereich ausbilden, in dem der Gewebeabschnitt aufnehmbar ist.

Die DE 10 2019 111 078 A1 betrifft eine Befestigungsanordnung mit Dämpfungswirkung, die aus zwei baugleichen Befestigungseinheiten mit jeweils einer zentralen ersten Durchgangsöffnung besteht. Jede Befestigungseinheit umfasst ein Montageelement und ein Dämpfungselement. Das Montageelement ist scheibenförmig mit einer zentralen zweiten Durchgangsöffnung ausgebildet und von einer ersten Seite jedes Montageelements erstreckt sich eine identische Raststruktur. Das Dämpfungselement ist scheibenförmig mit einer zentralen dritten Durchgangsöffnung ausgebildet und zumindest teilweise in der zentralen zweiten Durchgangsöffnung des Montageelements angeordnet. Aufgrund dieses Aufbaus sind die zwei Befestigungseinheiten über die einander zugewandten ersten Seiten mit der identischen Raststruktur der jeweiligen Montageelemente mit dazwischen angeordnetem erstem Bauteil aneinander befestigbar.

Die DE 10 2005 010 433 A1 betrifft ein Dämpfungslager zur schwingungs- und geräuschentkoppelten Befestigung eines Blechbauteils. Das Dämpfungslager besteht aus zwei aus elastomerem Werkstoff hergestellten Lagerteilen, die das Blechbauteil im Bereich einer Durchgangsöffnung halten und die von einem Befestigungsmittel durchsetzt sind. Das Dämpfungslager weist zwei baugleiche Lagerteile auf, die im Bereich zwischen Durchdringungsöffnung und radialer Abstützung entlang des Umfanges mindestens einen Zahn und eine mit der Anzahl der Zähne gleiche Anzahl am Umfang neben diesem Zahn oder diesen Zähnen angeordnete, zu dem Zahn gegenflächig kongruente Zahneingriffsmulden aufweisen.

Die DE 100 58 520 C1 stellt eine Befestigungsvorrichtung zum Befestigen eines scheibenförmigen Bauteils in einem Aufnahmekanal eines Aufnahmebauteils vor, wobei die Befestigungsvorrichtung in einer Bohrung des Bauteils und dazu ausgerichteten Durchbohrungen in den Wänden des Aufnahmekanals einsitzt, wobei der Durchmesser der Bohrung im scheibenförmigen Bauteil kleiner ist als der der Durchbohrungen im Aufnahmebauteil. Es sind zwei identische Clips vorgesehen, die von entgegengesetzten Enden in die Bohrungen einführbar sind. Jeder Clip weist einen annähernd ringzylindrischen Abschnitt und einen hohlen Schaft auf. Der in einer Durchbohrung einer Wand einsitzende ringzylindrische Abschnitt weist eine annähernd radiale annähernd ringförmige Schulter auf, die sich gegen die zugekehrte Seite des scheibenförmigen Bauteils anlegt. Der Schaft weist mindestens zwei in Umfangsrichtung beabstandete, sich durch die Bohrung des scheibenförmigen Bauteils und die Durchbohrung der anderen Wand erstreckende Beine auf, wobei der Zwischenraum zwischen benachbarten Beinen ein Bein des anderen Clips aufnehmen kann. Die Beine weisen auf der Außenseite einen radial vorstehenden Abschnitt auf, der mit der Lochwandung der Bohrung des scheibenförmigen Bauteils in Eingriff bringbar ist. Die beim Ineinanderstecken der Clips verschränkt angeordneten Beine sind über zusammenwirkende Rastmittel gegen ein Auseinanderziehen gesichert.

Die WO 2010 022 841 A1 betrifft eine Befestigungsanordnung zum Befestigen eines Bauteils B an einem Bauteil A mit selbsttätigem Ausgleich von Toleranzen im Abstand (S) zwischen dem Bauteil B und dem Bauteil A, die die folgenden Merkmale aufweist: a.) ein Aufnahmeelement und ein Verstellelement, das über eine erste Gewindepaarung einer ersten Gangrichtung mit dem Aufnahmeelement verschraubbar ist, während b.) durch eine Öffnung von Aufnahmeelement und Verstellelement eine Befestigungsschraube einsetzbar ist, die über eine zweite Gewindepaarung einer der ersten entgegengesetzten zweiten Gangrichtung in das Aufnahmeelement einschraubbar und mit dem Verstellelement durch eine lösbare Mitschleppverbindung verbindbar ist, um beim Drehen der Befestigungsschraube das Verstellelement mitzudrehen und dadurch in Anlage mit dem Bauteil B zu bewegen, und deren c.) Verstellelement aus einem innerhalb eines Gewindeelements drehfest und schwimmend angeordneten Mitschleppers besteht, so dass eine Fehlausrichtung der Befestigungsschraube beim Einsetzen in das Verstellelement ausgleichbar ist.

Aus der US 2 797 605 A ist ein zweiteiliges Befestigungselement aus elastischem Kunststoff bekannt, das ein Paar identischer Befestigungselemente aufweist, wobei jedes Element einen Kopf und einen Schaft umfasst, wobei jeder Schaft aus einer Vielzahl von Schaftabschnitten besteht, die seitlich in einem ausreichenden Abstand voneinander beabstandet sind, um die Abschnitte des Schafts des anderen Befestigungselements dazwischen aufzunehmen. Jeder der Schaftabschnitte umfasst eine Oberfläche, die mit den anderen Schaftabschnitten einen Schaftumfang bildet, wobei die Schaftabschnitte radiale Ränder haben, die winklig zueinander angeordnet sind, und jeder der radialen Ränder in der Nähe des von dem Kopf beabstandeten Endes des Schaftabschnitts über einen wesentlichen Teil der Schaftlänge in Richtung des Kopfes mit einer Vielzahl von Zahnformationen versehen ist. Jede Zahnformation weist an den radialen Rändern eine Fläche auf, die in einem spitzen Winkel zur Längsachse des Befestigungselements angeordnet ist und in eine Richtung vom Kopf weg weist, um das Einführen der Schaftabschnitte des Befestigungselements in Eingriff mit den Schaftabschnitten des anderen Befestigungselements zu erleichtern.

Vor diesem Hintergrund hat sich die Erfindung die Aufgabe gestellt, eine Befestigungsvorrichtung für ein Entkopplungselement und eine Entkopplungsbaugruppe für mit einer Karosseriestruktur eines Kraftfahrzeugs verbundene Anbauteile zur Verfügung zu stellen, die einfach herzustellen ist und mit geringem Bauteil- und Zeitaufwand montiert werden kann.

Die Aufgabe wird erfindungsgemäß gelöst durch ein Bauteil mit den Merkmalen des Anspruchs 1, eine Entkopplungsbaugruppe mit den Merkmalen des Anspruchs 6 und ein Verfahren mit den Merkmalen des Anspruchs 10. Ausgestaltungen und Weiterbildungen der Erfindung ergeben sich aus den abhängigen Ansprüchen, der Beschreibung und der Abbildung.

Gegenstand der Erfindung ist ein Bauteil, welches dafür eingerichtet ist, mit einem zweiten identischen Bauteil zusammengefügt zu werden, um eine Befestigungsstruktur für ein Entkopplungselement für ein mit einer Karosseriestruktur eines Kraftfahrzeugs verbundenes Anbauteil zu bilden. Eine Karosseriestruktur eines Kraftfahrzeugs kann erfindungsgemäß ein beliebiger Bereich in dem Fahrzeug sein, beispielweise ein Motorraum, ein Kofferraum oder ein anderer Bereich in dem Fahrzeug, wie ein Bodenplattenbereich, ein Dachbereich, ein Seitenverkleidungsbereich, oder auch eine weitere Komponente, wie beispielsweise eine Technikmulde, zum Beispiel in Form eines Bereichs des Kofferraums. Ein Kofferraum kann dabei je nach Ausgestaltung des Fahrzeugs in Fahrtrichtung gesehen im vorderen oder hinteren Bereich des Fahrzeugs angeordnet sein.

Das erfindungsgemäße Bauteil besteht aus einem Thermoplasten. Das erfindungsgemäße Bauteil besteht aus einem harten Material und stellt die Festigkeit der Baugruppe zur Verfügung. In einer Ausführungsform ist der Thermoplast Polyamid (PA), Polyamid 6 (PA6) oder Polyamid 66 (PA66), wobei auch mit Glasfasern verstärktes PA, PA6 oder PA66 zum Einsatz kommen kann.

Das erfindungsgemäße Bauteil umfasst eine Basisplatte, die einen zentralen Durchbruch aufweist. In einer Ausführungsform ist die Basisplatte rund. In einer anderen Ausführungsform ist die Außenkontur der Basisplatte ein Polygon mit einer geraden Anzahl von Ecken, beispielsweise vier, sechs oder acht Ecken.

In einer Ausführungsform ist der zentrale Durchbruch eine kreisförmige Öffnung. In einer anderen Ausführungsform ist die Außenkontur des zentralen Durchbruchs polygonal mit mindestens drei Ecken, beispielsweise eine dreieckige, viereckige, fünfeckige, sechseckige oder achteckige Öffnung.

Die Basisplatte weist mindestens zwei auf einer zu ihrem Zentrum (und damit zum Zentrum des zentralen Durchbruchs) koaxialen Kreislinie auf ihrer Oberseite äquidistant zueinander angeordnete identisch geformte Zylinderwandsegmente und jeweils zwischen zwei Zylinderwandsegmenten angeordnete Aussparungen auf. Dabei ist die Länge des Kreisbogens zwischen zwei Zylinderwandsegmenten mindestens so groß wie die Länge einer Oberkante eines Zylinderwandsegments. In einer Ausführungsform ist die Länge des Kreisbogens zwischen zwei Zylinderwandsegmenten genauso groß wie die Länge einer Oberkante eines Zylinderwandsegments.

Jedes der Zylinderwandsegmente weist auf seiner Oberkante eine Rastnase auf, welche dafür eingerichtet ist, in eine korrespondierende Aussparung der Basisplatte eines zweiten identischen Bauteils einzugreifen und die beiden Bauteile miteinander zu verrasten. Sind die Länge des Kreisbogens zwischen zwei Zylinderwandsegmenten und die Länge der Oberkante der Zylinderwandsegmente des Bauteils gleich groß, werden dabei die Lücken zwischen den Zylinderwandsegmenten beider Bauteile von den Zylinderwandsegmenten des jeweils anderen Bauteils ausgefüllt, so dass ein geschlossener Hohlzylinder ausgebildet wird. Ist die Länge des Kreisbogens zwischen zwei Zylinderwandsegmenten größer als die Länge der Oberkante der Zylinderwandsegmente, dann verbleiben nach dem Zusammenfügen Spalte zwischen den Zylinderwandsegmenten.

Die Zylinderwandsegmente sind identisch geformt und äquidistant zueinander angeordnet, so dass die Länge des Kreisbogens zwischen zwei Zylinderwandsegmenten mindestens so groß ist wie die Länge einer Oberkante eines Zylinderwandsegments. In einer Ausführungsform hat die Oberkante der Zylinderwandsegmente die gleiche Länge wie ihre Unterkante. In anderen Ausführungsformen ist die Länge der Oberkante der Zylinderwandsegmente kleiner als die Länge der Unterkante, d. h., die Zylinderwandsegmente verjüngen sich nach oben hin.

In einer Ausführungsform weist das erfindungsgemäße Bauteil zwei identische und äquidistant angeordnete Zylinderwandsegmente auf. In einer Ausführungsform ist das Bauteil spiegelsymmetrisch aufgebaut, wobei die Symmetrieebene durch die Hochachse (Z-Achse) des Bauteils verläuft.

In einer anderen Ausführungsform weist das erfindungsgemäße Bauteil mehr als zwei identische und äquidistant angeordnete Zylinderwandsegmente auf. In einer weiteren Ausführungsform weist das erfindungsgemäße Bauteil drei identische und äquidistant angeordnete Zylinderwandsegmente auf. In einer weiteren Ausführungsform weist das erfindungsgemäße Bauteil vier identische und äquidistant angeordnete Zylinderwandsegmente auf.

In einer Ausführungsform des erfindungsgemäßen Bauteils weist die Basisplatte am Rand des Durchbruchs angeordnete Zentrierelemente zwischen den äquidistant angeordneten Zylinderwandsegmenten auf.

Die dem zentralen Durchbruch zugewandte Seite jedes Zylinderwandsegments trägt ein Federelement. **In** einer Ausführungsform sind die Federelemente oberhalb der Ebene des Durchbruchs der Basisplatte angeordnet. **In** einer Ausführungsform sind die Federelemente Zungen, die sich parallel zur Basisplatte erstrecken. **In** einer Ausführungsform weist die Trägerstruktur mindestens zwei äquidistant angeordnete Federelemente auf. **In** einer weiteren Ausführungsform weist die Trägerstruktur mehr als zwei Federelemente auf, beispielsweise drei oder vier Federelemente.

Die Federelemente sind dafür eingerichtet, bei Einbringen eines Gewindebolzens oder Grobgewindebolzens in den zentralen Durchbruch des Bauteils in Gewindeflanken des Bolzens einzugreifen. Dadurch lässt sich das Bauteil auf dem Bolzen fixieren und es ist bei der Montage des Bauteils bzw. der Entkopplungsbaugruppe kein Schraubvorgang erforderlich. Die Befestigungsstruktur wird lediglich auf einen Gewindebolzen oder Grobgewindebolzen aufgesteckt. Das Verhaken in den Gewindeflanken erfolgt durch die Federelemente, welche radial im Inneren der Befestigungsstruktur angeordnet sind.

In einer Ausführungsform ist im Bereich der Federelemente die Breite des zentralen Durchbruchs mindestens so groß wie oder größer als die Breite der Federelemente. Dadurch können die Federelemente im Spritzgusswerkzeug besser entformt werden.

In einer Ausführungsform des erfindungsgemäßen Bauteils weist die Unterseite der Basisplatte Versteifungsrippen auf.

Gegenstand der Erfindung ist auch eine zwei identische erfindungsgemäße Bauteile und ein Entkopplungselement umfassende Entkopplungsbaugruppe. Die erfindungsgemäße Entkopplungsbaugruppe umfasst zwei identische erfindungsgemäße Bauteile und ein Entkopplungselement aus einem Elastomeren. Das Entkopplungselement besteht aus einem weichen elastischen Material und bewirkt eine Schwingungsentkopplung der Befestigungsstruktur und eine Dämpfung von Vibrationen und Körperschall. **In** einer Ausführungsform ist das Elastomer ein Ethylen-Propylen-Dien-Kautschuk (EPDM), ein thermoplastisches Elastomer (TPE) oder ein vernetztes thermoplastisches Elastomer auf Olefinbasis (TPV).

In einer Ausführungsform hat das Entkopplungselement die Form eines Zylinders. In einer anderen Ausführungsform hat das Entkopplungselement die Form eines polygonalen Prismas, beispielsweise eines Prismas mit einer viereckigen, sechseckigen oder achteckigen Grundfläche. In einer Ausführungsform weist das Entkopplungselement an seiner Außenfläche eine umlaufende Nut auf, die dafür vorgesehen ist, in den Rand einer Aussparung eines Halters einzurasten und das Entkopplungselement in der Aussparung zu fixieren.

Das Entkopplungselement weist einen zentralen zylindrischen Kanal auf, dessen Durchmesser mindestens dem Außendurchmesser des von den Zylinderwandsegmenten der Befestigungsstruktur gebildeten Hohlzylinders entspricht. Der Durchmesser kann auch größer sein. Der so entstehende Spalt zwischen dem Außendurchmesser der Zylinderwandsegmente und dem Innendurchmesser des Entkopplungselements fördert die Entkopplung zusätzlich. Die Länge des zentralen Kanals entspricht der Höhe der Zylinderwandsegmente der Befestigungsstruktur, d. h., der Länge des Hohlzylinders der Befestigungsstruktur.

In der erfindungsgemäßen Entkopplungsbaugruppe umschließt das Entkopplungselement den aus den Zylinderwandsegmenten der Befestigungsstruktur gebildeten Hohlzylinder. Die Basisplatten der Bauteile der Befestigungsstruktur kontaktieren die Ober- und Unterseite des Entkopplungselements und fixieren es in der Entkopplungsbaugruppe.

Gegenstand der Erfindung ist auch ein Verfahren zur Schwingungsentkopplung eines Anbauteils an einer Karosseriestruktur eines Kraftfahrzeugs. Bei dem Verfahren wird ein einen zentralen zylindrischen Kanal aufweisendes Entkopplungselement aus einem Elastomeren in eine Aussparung eines Halters des Anbauteils eingebracht und dort fixiert, beispielsweise mit dem Rand der Aussparung verrastet. Anschließend werden zwei identische erfindungsgemäße Bauteile von gegenüberliegenden Seiten der Aussparung des Halters des Anbauteils in den zentralen zylindrischen Kanal des Entkopplungselements gesteckt und unter Bildung einer Entkopplungsbaugruppe miteinander verrastet. Dabei greifen die Rastnasen des ersten Bauteils in die korrespondierenden Aussparungen des zweiten Bauteils ein und die Rastnasen des zweiten Bauteils greifen in die korrespondierenden Aussparungen des ersten Bauteils ein. Anschließend wird die Entkopplungsbaugruppe auf einen an einer Karosseriestruktur des Kraftfahrzeugs angebrachten Gewindebolzen aufgesteckt. Dadurch greifen Federelemente der Entkopplungsbaugruppe in Gewindeflanken des Bolzens ein und fixieren die Entkopplungsbaugruppe. Der Gewindebolzen kann erfindungsgemäß auch als Grobgewindebolzen ausgestaltet sein.

Dabei kann die Karosseriestruktur ein beliebiger Bereich am Fahrzeug sein, bspw. ein Motorraum, ein Kofferraum oder ein beliebiger anderer Bereich in dem Fahrzeug, wie ein Bodenplattenbereich, ein Dachbereich, ein Seitenverkleidungsbereich oder eine weitere Komponente, wie beispielsweise eine Technikmulde, zum Beispiel in Form eines Bereichs des Kofferraums.

Das zu entkoppelnde und zu befestigende Anbauteil ist eine im Fahrzeug befindliche Komponente, beispielsweise ein Ventil, eine elektrisch angetriebene Wasserpumpe, ein Sensor, ein Steuergerät, oder eine Rohrleitung.

Die Entkopplungsbaugruppe muss bei der Montage lediglich über einen Gewinde- bzw. Grobgewindebolzen aufgesteckt werden, wobei sich die federnden Elemente aus Kunststoff im Inneren der Entkopplungsbaugruppe in den Gewindeflanken des Bolzens verhaken. Dabei ist eine Verdrehsicherung nicht notwendig, da das Entkopplungselement am Halter aufliegt und durch die Flächenpressung ein Reibmoment entwickelt, so dass sich das Element nicht von selbst (bspw. durch Schwingungsanregung während der Fahrt) lösen kann. Die beiden Hälften der Befestigungsstruktur der Entkopplungsbaugruppe werden zur Montage (und vor dem Aufstecken) jeweils von einer Seite des Halters im zentralen zylindrischen Kanal des Entkopplungselements ineinandergesteckt, wobei die Rastnasen der jeweiligen Hälfte in den Aussparungen am Boden der jeweils anderen Hälfte verrasten.

Durch die erfindungsgemäße Entkopplungsbaugruppe werden gegenüber Entkopplungselementen des Standes der Technik pro Entkopplungsbaugruppe eine Distanzbuchse, eine Unterlegscheibe und eine Mutter oder Schraube eingespart. Die Montage einer Entkopplungsbaugruppe wird vereinfacht und aufgrund der Kunststoffbauweise ergibt sich ein geringes Gewicht. Beim Montagevorgang wird ein Aufschrauben einer Mutter oder Schraube ersetzt durch ein Aufstecken der Entkopplungsbaugruppe, was zu einer Verkürzung der Fertigungszeit führt. Zudem entfällt ein Anziehen der Mutter bzw. Schraube mittels Drehmomentschlüssel. Diverse Kleinteile und Montagewerkzeuge können in der Montage eingespart werden. Weitere Vorteile und Ausgestaltungen der Erfindung ergeben sich aus der Beschreibung und den beiliegenden Zeichnungen.

Es versteht sich, dass die voranstehend genannten und die nachstehend, noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen weiter beschrieben. Es zeigt:
- Figur 1: eine schematische Darstellung einer Ausführungsform des erfindungsgemäßen Bauteils;
- Figur 2: eine Ansicht von unten einer Ausführungsform des erfindungsgemäßen Bauteils;
- Figur 3: eine schematische Darstellung zweier zusammengesteckter erfindungsgemäßer Bauteile;
- Figur 4: einen Längsschnitt einer Entkopplungsbaugruppe, die zwei erfindungsgemäße Bauteile umfasst;
- Figur 5: Arbeitsschritte (Montageschritte) des erfindungsgemäßen Verfahrens.

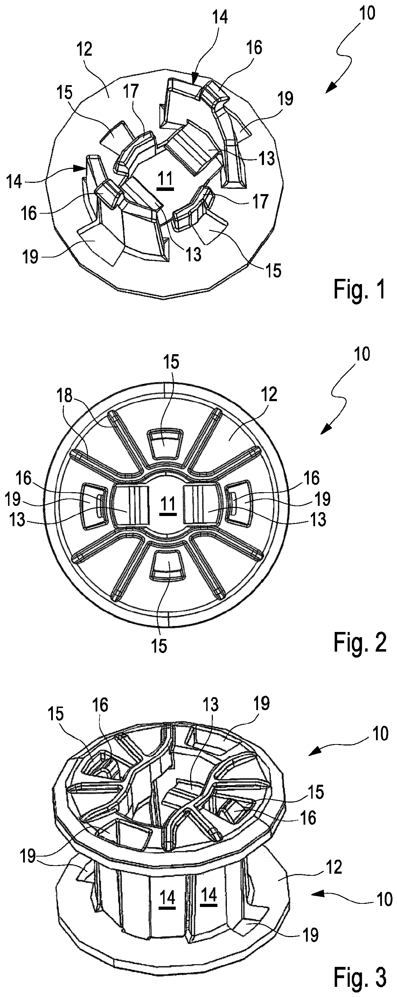

Figur 1 zeigt eine Ausführungsform des erfindungsgemäßen Bauteils 10. Das dargestellte Bauteil 10 kann mit einem zweiten identischen Bauteil 10 zusammengesteckt werden. Das Bauteil 10 besteht aus einem harten Thermoplasten, bspw. PA, PA6, PA66, etc., mit oder ohne Glasfaseranteil.

Das Bauteil 10 umfasst eine Basisplatte 12 mit einem zentralen Durchbruch 11. In der dargestellten Ausführungsform ist die Basisplatte 12 rund und der zentrale Durchbruch 21 ist eine längliche Öffnung mit kreisförmigem Mittelteil. In einer anderen Ausführungsform ist die Außenkontur der Basisplatte 12 ein Polygon mit einer geraden Anzahl von Ecken, beispielsweise vier, sechs oder acht Ecken. Auch der zentrale Durchbruch 11 kann eine polygonale Kontur mit mindestens drei Ecken aufweisen, beispielsweise dreieckig, viereckig, fünfeckig, sechseckig oder achteckig sein.

Auf der Oberseite der Basisplatte 12 befinden sich auf einer zu dem Zentrum des Durchbruchs 11 koaxialen Kreislinie zwei Zylinderwandsegmente 14. In der dargestellten Ausführungsform erstreckt sich der Durchbruch 11 von der Basis des einen Zylinderwandsegments 14 bis zur Basis des anderen Zylinderwandsegments 14. Die Zylinderwandsegmente 24 sind identisch geformt und äquidistant zueinander angeordnet, so dass die Länge des Kreisbogens zwischen zwei Zylinderwandsegmenten 14 gleich der Länge einer Oberkante eines Zylinderwandsegments 14 ist. In der dargestellten Ausführungsform ist die Länge der Oberkante der Zylinderwandsegmente 14 kleiner als die Länge der Unterkante, d. h., die Zylinderwandsegmente 14 verjüngen sich nach oben. In anderen Ausführungsformen hat die Oberkante der Zylinderwandsegmente 14 die gleiche Länge wie ihre Unterkante.

Jeweils zwischen zwei Zylinderwandsegmenten 14 befindet sich eine erste Aussparung 15 in der Basisplatte 12; und jedes der Zylinderwandsegmente 14 weist auf seiner Oberkante eine Rastnase 16 auf. Die Rastnase 16 ist dafür eingerichtet, in eine korrespondierende erste Aussparung 15 eines zweiten identischen Bauteils 10 einzugreifen, wenn dieses auf das Bauteil 10 aufgesteckt wird, und die beiden Bauteile 10 miteinander zu verrasten. Die Lücken zwischen den Zylinderwandsegmenten 14 beider Bauteile 10 werden dabei von den Zylinderwandsegmenten 14 des jeweils anderen Bauteils 10 ausgefüllt, so dass ein geschlossener Hohlzylinder ausgebildet wird.

Auf der Rückseite jedes Zylinderwandsegments 14 befindet sich eine zweite Aussparung 19 in der Basisplatte 12. Die Aussparung 19 erleichtert die Herstellung des Bauteils 10 im Spritzgussverfahren durch Vermeidung von Hinterschnitten, die zusätzliche Schieber im Spritzgusswerkzeug erforderlich machen. Das Bauteil könnte aber durchaus auch ohne die Aussparung 19 hergestellt werden.

Auf der Oberseite der Basisplatte 12 ist an der dem Durchbruch 11 zugewandten Seite jedes der Zylinderwandsegmente 14 jeweils ein Federelement 13 angeordnet. Die Federelemente 13 sind dafür eingerichtet, bei Einbringen eines Gewindebolzens 300 in den Durchbruch 11 in Gewindeflanken des Gewindebolzens 300 einzugreifen. Die dargestellte Ausführungsform weist zwei Federelemente 13 auf, die auf einander gegenüberliegenden Seiten des Durchbruchs 11 angebracht sind. In der dargestellten Ausführungsform sind die Federelemente oberhalb des Durchbruchs 11 angeordnet. In der dargestellten Ausführungsform sind die Federelemente 13 als Zungen ausgeführt, die sich parallel zur Basisplatte 12 erstrecken.

In der dargestellten Ausführungsform sind auf der Oberseite der Basisplatte 12 am Rand des Durchbruchs 11 Zentrierelemente 17 zwischen den Federelementen 13 angeordnet. Diese führen einen Gewindebolzen 300, der durch den zentralen Durchbruch 11 des Bauteils 10 eintritt und verhindern, dass er sich verhakt.

In der dargestellten Ausführungsform ist das Bauteil 10 spiegelsymmetrisch aufgebaut, wobei die Symmetrieebene durch die Hochachse (Z-Achse) des Bauteils 10 verläuft.

Figur 2 zeigt eine Ansicht von unten einer Ausführungsform des erfindungsgemäßen Bauteils 10.

Das Bauteil 10 umfasst eine Basisplatte 12 mit einem zentralen Durchbruch 11. In der dargestellten Ausführungsform ist die Basisplatte 12 rund und der zentrale Durchbruch 21 ist eine längliche Öffnung mit kreisförmigem Mittelteil.

In der Ansicht von unten sind die Federelemente 13 und die Rastnasen 16, die an den in dieser Darstellung nicht sichtbaren Zylinderwandsegmenten 14 angeordnet sind und sich oberhalb der Ebene der Basisplatte 12 befinden, gut zu erkennen, ebenfalls die ersten Aussparungen 15 und die zweiten Aussparungen 19 in der Basisplatte 12. Auf der Unterseite der Basisplatte 12 sind Versteifungsrippen 18 angeordnet, welche die Steifigkeit des Bauteils 10 erhöhen.

Figur 3 zeigt eine Baugruppe aus zwei zusammengesteckten erfindungsgemäßen Bauteilen 10. Die Rastnasen 16 der beiden Bauteile 10 greifen in die korrespondierenden ersten Aussparungen 15 des jeweils anderen Bauteils 10 ein und verrasten die beiden Bauteile 10 miteinander. Die Zylinderwandsegmente 14 beider Bauteile 10 bilden einen geschlossenen Hohlzylinder aus.

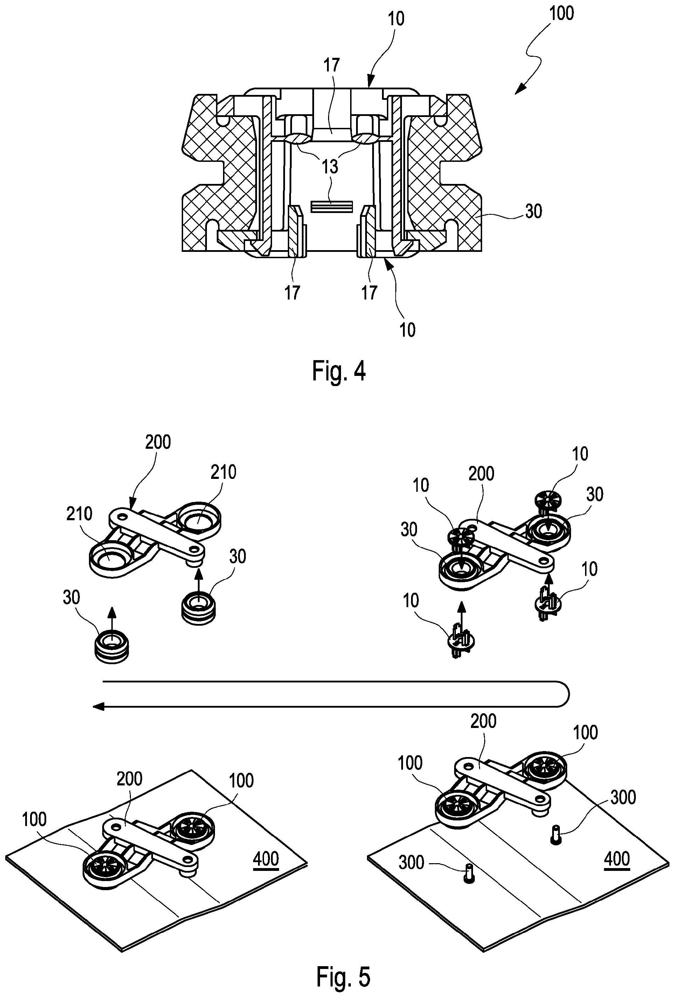

Figur 4 zeigt einen Längsschnitt durch eine Entkopplungsbaugruppe 100, die zwei zusammengesteckte erfindungsgemäße Bauteile 10 und ein Entkopplungselement 30 umfasst. Das Entkopplungselement 30 besteht aus einem weichen elastischen Material, bspw. aus EPDM, TPE, oder TPV. Die beiden Komponenten 10, 30 der Entkopplungsbaugruppe 100 haben unterschiedliche Funktionen. Die harte Komponente 10 fungiert als Trägerstruktur und stellt die Festigkeit der Baugruppe 100 zur Verfügung, die weiche Komponente 30 bewirkt eine Schwingungsentkopplung zwischen einem Halter 200 und den Bauteilen 10 und sorgt dabei für die Dämpfung von Vibrationen und Körperschall. Das Entkopplungselement 30 umschließt den aus den Zylinderwandsegmenten 14 der zusammengesteckten Bauteile 10 gebildeten Hohlzylinder. Wird ein Gewindebolzen 300 in die zentrale Öffnung der Entkopplungsbaugruppe 100 eingeführt, so führen ihn die Zentrierelemente 17 und verhindern ein Verhaken. Die Federelemente 13 greifen in Gewindeflanken des Gewindebolzens 300 ein und fixieren dadurch die Entkopplungsbaugruppe 100 auf dem Gewindebolzen 300.

Figur 5 zeigt Arbeitsschritte des erfindungsgemäßen Verfahrens zur Schwingungsentkopplung eines mit einer Karosseriestruktur 400 in einem Kraftfahrzeug verbundenen Halters 200.

In der Abbildung links oben ist ein Halter 200 für ein Anbauteil dargestellt, der Aussparungen 210 aufweist. Zunächst werden zwei identische Entkopplungselemente 30 in die Aussparungen eingebracht.

In der Abbildung rechts oben ist dargestellt, wie jeweils anschließend zwei identische erfindungsgemäße Bauteile 10 von entgegengesetzten Seiten durch zentrale Öffnungen der Entkopplungselemente 30 und die Aussparungen 210 des Halters 200 gesteckt und miteinander verrastet werden, um Entkopplungsbaugruppen 100 zu bilden.

Die Abbildung rechts unten zeigt die Montage des Halters 200 an einer Karosseriestruktur 400 eines Kraftfahrzeugs. Dazu wird der Halter 200 einfach auf Gewindebolzen 300 gesteckt, die an der Karosseriestruktur 400 angebracht sind. Die in den Entkopplungsbaugruppen 100 enthaltenen Federelemente 13 greifen dabei in Gewindeflanken der Gewindebolzen 300 ein und fixieren dadurch den Halter 200 auf den Gewindebolzen 300, ohne zusätzliche Bauteile oder weitere Arbeitsschritte.

Die Abbildung links unten zeigt das Ergebnis des Montagevorgangs.

Die Karosseriestruktur 400, an der der Gewindebolzen 300 montiert ist, kann beispielsweise Teil eines Motorraums oder einer Technikmulde eines Fahrzeugs sein. Die Technikmulde kann zum Beispiel nach der Montage des Halters 200 mittels dieses Halters 200 ein Reparaturwerkzeugset aufnehmen. Beispielsweise kann mit den erfindungsgemäßen Bauteilen 10 in der Technikmulde ein Ventil auf dem Halter 200 befestigt werden, um z. B. ein Steuergerät zu kühlen.

### Bezugszeichenliste

- 10: Bauteil
- 11: Durchbruch
- 12: Basisplatte
- 13: Federelement
- 14: Zylinderwandsegment
- 15: erste Aussparung
- 16: Rastnase
- 17: Zentrierelement
- 18: Versteifungsrippen
- 19: zweite Aussparung
- 30: Entkopplungselement
- 100: Entkopplungsbaugruppe
- 200: Halter
- 210: Aussparung
- 300: Gewindebolzen
- 400: Karosseriestruktur

## Patentansprüche

1. Bauteil (10) aus einem Thermoplasten, welches dafür eingerichtet ist, mit einem zweiten identischen Bauteil (10) und einem Entkopplungselement (30) aus einem Elastomeren zusammengefügt zu werden, um eine Entkopplungsbaugruppe (100) für ein mit einer Karosseriestruktur verbundenes Anbauteil eines Kraftfahrzeugs zu bilden, umfassend
i) eine einen zentralen Durchbruch (11) aufweisende Basisplatte (12),
ii) mindestens zwei auf der Oberseite der Basisplatte (12) auf einer zu dem Zentrum des Durchbruchs (11) koaxialen Kreislinie äquidistant zueinander angeordneten identisch geformten Zylinderwandsegmenten (14), deren dem Durchbruch (11) zugewandte Seite jeweils mindestens ein Federelement (13) aufweist, welches dafür eingerichtet ist, bei Einbringen eines Gewindebolzens (300) in den Durchbruch (11) in Gewindeflanken des Gewindebolzens (300) einzugreifen,
wobei die Länge des Kreisbogens zwischen zwei Zylinderwandsegmenten (14) mindestens so groß wie die Länge einer Oberkante eines Zylinderwandsegments (14) ist,
**dadurch gekennzeichnet, dass** jedes der Zylinderwandsegmente (14) auf seiner Oberkante eine Rastnase (16) aufweist, welche dafür eingerichtet ist, in eine korrespondierende Aussparung (15) des zweiten identischen Bauteils (10) einzugreifen und die beiden Bauteile (10) miteinander zu verrasten, und dass das Bauteil (10)
iii) jeweils zwischen zwei Zylinderwandsegmenten (14) angeordnete Aussparungen (15) aufweist.

2. Bauteil (10) nach Anspruch 1, welches mehr als zwei Zylinderwandsegmente (14) aufweist.

3. Bauteil (10) nach Anspruch 1 oder 2, welches am Rand des Durchbruchs (11) angeordnete Zentrierelemente (17) zwischen den äquidistant angeordneten Zylinderwandsegmenten (14) aufweist.

4. Bauteil (10) nach einem der Ansprüche 1 bis 3, worin der Thermoplast ein gegebenenfalls mit Glasfasern verstärktes Polyamid (PA), Polyamid 6 (PA6) oder Polyamid 66 (PA66) ist.

5. Bauteil (10) nach einem der voranstehenden Ansprüche, welches durch ein Spritzgussverfahren hergestellt ist.

6. Entkopplungsbaugruppe (100) für ein Anbauteil an einer Karosseriestruktur (400) eines Kraftfahrzeugs, welche zwei identische Bauteile (10) nach einem der voranstehenden Ansprüche und ein Entkopplungselement (30) aus einem Elastomeren umfasst.

7. Entkopplungsbaugruppe (100) nach Anspruch 6, worin das Elastomer ein Ethylen-Propylen-Dien-Kautschuk (EPDM), ein thermoplastisches Elastomer (TPE) oder ein vernetztes thermoplastisches Elastomer auf Olefinbasis (TPV) ist.

8. Entkopplungsbaugruppe (100) nach Anspruch 6 oder 7, worin das Entkopplungselement (30) einen zentralen zylindrischen Kanal aufweist.

9. Entkopplungsbaugruppe (100) nach einem der Ansprüche 6 bis 8, worin das Entkopplungselement (30) an seiner Außenseite eine umlaufende Nut aufweist.

10. Verfahren zur Schwingungsentkopplung eines Anbauteils an einer Karosseriestruktur (400) eines Kraftfahrzeugs, bei dem ein einen zentralen zylindrischen Kanal aufweisendes Entkopplungselement (30) aus einem Elastomeren in eine Aussparung (210) eines Halters (200) des Anbauteils eingebracht und dort fixiert wird, anschließend zwei Bauteile (10) von gegenüberliegenden Seiten der Aussparung (210) des Halters (210) des Anbauteils in den zentralen zylindrischen Kanal des Entkopplungselements (30) gesteckt und unter Bildung einer Entkopplungsbaugruppe (100) miteinander verrastet werden, und anschließend die Entkopplungsbaugruppe (100) auf einen an einer Karosseriestruktur (400) des Kraftfahrzeugs angebrachten Gewindebolzen (300) aufgesteckt wird, wodurch Federelemente (13) der Entkopplungsbaugruppe (100) in Gewindeflanken des Gewindebolzens (300) eingreifen und die Entkopplungsbaugruppe (100) fixieren, **dadurch gekennzeichnet, dass** zwei Bauteile (10) nach einem der Ansprüche 1 bis 5 miteinander verrastet werden.

## Claims

1. Component (10) made of a thermoplastic, which is configured to be assembled with a second identical component (10) and a decoupling element (30) made of an elastomer to form a decoupling assembly (100) for an add-on part of a motor vehicle connected to a body structure, comprising
i) a base plate (12) having a central opening (11),
ii) at least two identically shaped cylinder wall segments (14) arranged equidistantly from one another on the upper side of the base plate (12) on a circular line coaxial with the center of the opening (11), each side facing the opening (11) having at least one spring element (13) which is configured to engage in thread flanks of a threaded bolt (300) when the threaded bolt (300) is introduced into the opening (11),
wherein the length of the circular arc between two cylinder wall segments (14) is at least as great as the length of an upper edge of a cylinder wall segment (14),
**characterized in that** each of the cylinder wall segments (14) has on its upper edge a detent lug (16) which is configured to engage in a corresponding recess (15) of the second identical component (10) and to lock the two components (10) together, and that the component (10)
iii) has recesses (15) arranged between each two cylinder wall segments (14).

2. Component (10) according to claim 1, which has more than two cylinder wall segments (14).

3. Component (10) according to claim 1 or 2, which includes centering elements (17) arranged at the edge of the opening (11) between the equidistantly arranged cylinder wall segments (14).

4. Component (10) according to any one of claims 1 to 3, wherein the thermoplastic is a polyamide (PA), polyamide 6 (PA6), or polyamide 66 (PA66), optionally reinforced with glass fibers.

5. Component (10) according to any one of the preceding claims, which is produced by an injection molding method.

6. Decoupling assembly (100) for an add-on part on a body structure (400) of a motor vehicle, which comprises two identical components (10) according to any one of the preceding claims and a decoupling element (30) made of an elastomer.

7. Decoupling assembly (100) according to claim 6, wherein the elastomer is an ethylene propylene diene rubber (EPDM), a thermoplastic elastomer (TPE), or a crosslinked olefin-based thermoplastic elastomer (TPV).

8. Decoupling assembly (100) according to claim 6 or 7, wherein the decoupling element (30) has a central cylindrical channel.

9. Decoupling assembly (100) according to any one of claims 6 to 8, wherein the decoupling element (30) has a circumferential groove on its outside.

10. Method for vibration decoupling of an add-on part on a body structure (400) of a motor vehicle, wherein a decoupling element (30) made of an elastomer and having a central cylindrical channel is introduced into a recess (210) of a holder (200) of the add-on part and fixed there, subsequently two components (10) are plugged from opposite sides of the recess (210) of the holder (210) of the add-on part into the central cylindrical channel of the decoupling element (30) and locked together to form a decoupling assembly (100), and subsequently the decoupling assembly (100) is plugged onto a threaded bolt (300) attached to a body structure (400) of the motor vehicle, whereby spring elements (13) of the decoupling assembly (100) engage in thread flanks of the threaded bolt (300) and fix the decoupling assembly (100), **characterized in that** two components (10) according to any one of claims 1 to 5 are locked together.

## Revendications

1. Composant (10) en un thermoplastique qui est configuré pour être assemblé avec un second composant identique (10) et un élément de découplage (30) en un élastomère pour former un ensemble de découplage (100) pour une pièce rapportée d'un véhicule automobile connectée à une structure de carrosserie, comprenant
i) une plaque de base (12) présentant une ouverture centrale (11),
ii) au moins deux segments de paroi de cylindre (14) de forme identique, disposés à équidistance l'un de l'autre sur le côté supérieur de la plaque de base (12) sur une ligne circulaire coaxiale au centre de l'ouverture (11), dont le côté tourné vers l'ouverture (11) présente respectivement au moins un élément à ressort (13) qui est configuré pour s'engager dans des flancs filetés du boulon fileté (300) lors de l'introduction d'un boulon fileté (300) dans l'ouverture (11),
dans lequel la longueur de l'arc de cercle entre deux segments de paroi de cylindre (14) est au moins aussi grande que la longueur d'un bord supérieur d'un segment de paroi de cylindre (14),
**caractérisé en ce que** chacun des segments de paroi de cylindre (14) présente sur son bord supérieur un nez de butée (16) qui est configuré pour s'engager dans un évidement correspondant (15) du second composant identique (10) et pour encliqueter les deux composants (10) l'un avec l'autre, et **en ce que** le composant (10)
iii) présente des évidements (15) disposés respectivement entre deux segments de paroi de cylindre (14).

2. Composant (10) selon la revendication 1 qui présente plus de deux segments de paroi de cylindre (14).

3. Composant (10) selon la revendication 1 ou 2 qui présente des éléments de centrage (17) disposés sur le bord de l'ouverture (11) entre les segments de paroi de cylindre (14) équidistants.

4. Composant (10) selon l'une quelconque des revendications 1 à 3, dans lequel le thermoplastique est un polyamide (PA), polyamide 6 (PA6) ou polyamide 66 (PA66) le cas échéant renforcé par des fibres de verre.

5. Composant (10) selon l'une quelconque des revendications précédentes qui est fabriqué par un procédé de moulage par injection.

6. Ensemble de découplage (100) pour une pièce rapportée sur une structure de carrosserie (400) d'un véhicule automobile, laquelle structure comprend deux pièces identiques (10) selon l'une quelconque des revendications précédentes et un élément de découplage (30) en un élastomère.

7. Ensemble de découplage (100) selon la revendication 6, dans lequel l'élastomère est un caoutchouc éthylène-propylène-diène (EPDM), un élastomère thermoplastique (TPE) ou un élastomère thermoplastique réticulé à base d'oléfine (TPV).

8. Ensemble de découplage (100) selon la revendication 6 ou 7, dans lequel l'élément de découplage (30) présente un canal cylindrique central.

9. Ensemble de découplage (100) selon l'une quelconque des revendications 6 à 8, dans lequel l'élément de découplage (30) présente une rainure circonférentielle sur son côté extérieur.

10. Procédé de découplage par vibrations d'une pièce rapportée sur une structure de carrosserie (400) d'un véhicule automobile, dans lequel un élément de découplage (30) en un élastomère présentant un canal cylindrique central est introduit dans un évidement (210) d'un support (200) de la pièce rapportée et y est fixé, puis deux composants (10) sont insérés à partir de côtés opposés de l'évidement (210) du support (210) de la pièce rapportée dans le canal cylindrique central de l'élément de découplage (30) et sont encliquetés ensemble pour former un ensemble de découplage (100), puis l'ensemble de découplage (100) est enfiché sur un boulon fileté (300) disposé sur une structure de carrosserie (400) du véhicule automobile, moyennant quoi des éléments à ressort (13) de l'ensemble de découplage (100) s'engagent dans des flancs filetés du boulon fileté (300) et fixent l'ensemble de découplage (100), **caractérisé en ce que** deux composants (10) selon l'une quelconque des revendications 1 à 5 sont encliquetés l'un avec l'autre.
